# EUROPEAN PATENT APPLICATION

(11) **EP 4 265 674 A1**
(43) Date of publication of application: **25.10.2023**
(21) Application number: 22169436.7
(22) Date of filing: 22.04.2022
(51) Int. Cl.: C08K 3/04

(54) **HIGHLY ELECTRICALLY CONDUCTIVE COMPOUNDS FOR HIGH TEMPERATURE BATTERY ELECTRODE PLATES**

(71) Applicant: SHPP Global Technologies B.V., 4612 PX Bergen op Zoom (NL)
(72) Inventor: SILVI, Norberto, New York, 12158 (US); THOMPSON, Walter, Delaware, 19810 (US)
(74) Representative: Dehns

(57) **Abstract**

Thermoplastic compositions include: from about 40 wt% to about 75 wt% of at least one polyphenylene sulfide (PPS) polymer; and from at least 35 wt% to about 60 wt% of a combination of at least two carbon-based fillers, including a first carbon-based filler including graphite and a second carbon-based filler including carbon powder, carbon nanotubes, or a combination thereof. The composition exhibits a volume electrical resistivity of less than about 5 Ohm.cm as measured by ASTM D991. The combined weight percent value of all components does not exceed 100 wt%, and all weight percent values are based on the total weight of the composition. Methods for making the thermoplastic compositions are also described, including using a PPS-based masterbatch to form the compositions.

## Description

### FIELD OF THE DISCLOSURE

The present disclosure relates to polyphenylene sulfide (PPS)-based polymers, and in particular to PPS-based polymers including at least two carbon-based fillers that have improved electrical conductivity properties and that are suitable for use in battery electrode plates.

### BACKGROUND OF THE DISCLOSURE

The search for carbon-plastic electrode compositions to use as electrode plates in zinc bromide batteries started in the late 1970s. U.S. Patent No. 4,169,816 (the "816 Patent") by Exxon Research & Engineering, for example, describes a homogeneous blend of a crystalline polypropylene-ethylene copolymer, an electrically conductive carbon black, a small quantity of silica, and a fiber-reinforcing agent selected from carbon fibers and mixtures of carbon and glass fibers. The composition was reported to have excellent strength, good extrudability, excellent volume resistivity (1 Ohm.cm), and good impermeability. The Exxon patent provides that to impart electrical conductivity, the composition should contain at least 15 parts by weight of a finely divided conductive carbon powder per hundred parts (pph) of the copolymer. It also provides that 35 pph of the conductive carbon should not be employed; otherwise, the composition is too brittle and also less easily extrudable into thin nonporous sheets. Also, increasing the amount of carbon to about 35 pph tends to increase the permeability of the thin sheets manufactured from such compositions to liquids such as bromine, as an example. It is preferred that the finely divided conductive carbon black has a surface area greater than about 500 m²/g, such as those manufactured under the tradename Ketjenblack EC.

Johnson Controls began research into plastic-carbon electrodes in the 1990s, reporting at the time that the ethylene-propylene (EP) copolymer based electrodes developed by Exxon were susceptible to oxidative attack, swelling and warpage. They explained that the mechanism behind the bromide attack was the vulnerability of tertiary hydrogens in the backbone of the propylene chain. To circumvent this problem Johnson Controls selected HDPE homopolymer, which eliminates most, if not all, tertiary hydrogens on the backbone chain. Johnson Controls reported positive results in aging studies with the base polymer substitution; HDPE was superior to EP copolymer.

Globe-Union Inc. (a Johnson Controls subsidiary) patented their HDPE-based carbon-plastic electrodes in December 1992. U.S. Patent No. 5,173,362 (the "362 Patent") describes compositions for electrode systems, particularly those to be used for bipolar electrodes in zinc-bromine batteries. These compositions preferably included carbon-black as a conductive filler in a polymeric matrix, with reinforcing materials such as glass fibers. The warpage of the zinc-bromine electrodes experienced in the prior art, and which was believed to be caused by physical expansion of the electrodes due to bromine absorption by the material of the electrode, was substantially eliminated in the compositions and fabrication processes described in this disclosure. In this patent, materials were prepared using a lamination process, known as glass-mat reinforced thermoplastics technology or, in a different embodiment, the substrate is made using a slurry process. Bromination, unlike chlorination, is extremely selective to the chemistry of the polymer matrix used, and the tertiary hydrogens of polypropylene systems react approximately twenty thousand times faster with bromine than the secondary hydrogens in polyethylene. Three carbon blacks were used in the compositions of this disclosure, but the Ketjenblack EC 300J grade offered the best combination of electrical conductivity and processability properties for the amount of carbon used. The 362 Patent describes wide carbon black and fiber loadings ranging from 5-40 wt% and 10-70 wt%, respectively, but also exemplifies a composition having a carbon loading of 18 wt% (identical to Exxon), so it is likely that the carbon and fiber loadings used in the Johnson Controls patent are close to those disclosed in the 816 Patent.

SABIC's U.S. Provisional Patent Application No. 63/162,615 (the "615 Application") entitled "Electrically Conductive Compositions for Battery Electrode Plates" relates to thermoplastic compositions having high electrical conductivity, and in particular to polyethylene-based compositions including graphite filler and carbon black powder that are suitable for use in battery electrode applications. The materials of this disclosure showed good chemical resistance and electrical conductivity but were difficult to extrude into relatively thin sheets due to the high loadings of carbon filler used. Also, the sheets produced from the compositions of this disclosure could not be used at temperatures higher than about 60 °C due to the limited heat resistance of the polyethylene polymer used as the continuous matrix in these formulations.

None of these previous efforts demonstrate a balance of electrical conductivity, chemical resistance, and processability required to manufacture thin sheets for battery electrode plates using conventional extrusion or molding processes.

These and other shortcomings are addressed by aspects of the present disclosure.

### SUMMARY

Aspects of the disclosure relate to thermoplastic compositions including: from about 40 wt% to about 75 wt% of at least one polyphenylene sulfide (PPS) polymer; and from at least 35 wt% to about 60 wt% of a combination of at least two carbon-based fillers, including a first carbon-based filler including graphite and a second carbon-based filler including carbon powder, carbon nanotubes, or a combination thereof. The composition exhibits a volume electrical resistivity of less than about 5 Ohm.cm as measured by ASTM D991. The combined weight percent value of all components does not exceed 100 wt%, and all weight percent values are based on the total weight of the composition.

Further aspects of the disclosure relate to methods for forming a composition including from about 40 wt% to about 75 wt% of at least one polyphenylene sulfide (PPS) polymer and from at least 35 wt% to about 60 wt% of a combination of at least two carbon-based fillers. The method includes: combining the at least one PPS polymer and the at least two carbon-based fillers to form a mixture; and extruding the mixture to form the composition. The at least two carbon-based fillers include a first carbon-based filler including graphite and a second carbon-based filler including carbon powder, carbon nanotubes, or a combination thereof. The composition exhibits a volume electrical resistivity of less than about 5 Ohm.cm as measured by ASTM D991.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.
FIG. 1 is a diagram of an apparatus used for determining shielding effectiveness (SE) according to aspects of the disclosure.
FIG. 2 is a graph of SE as a function of frequency for example compositions Ex2.1, Ex2.2 and Ex2.4 according to aspects of the disclosure.

### DETAILED DESCRIPTION

The present disclosure relates to highly-filled plastic materials used, for example, to replace metallic electrode plates of flow batteries, such as zinc bromide and vanadium redox flow batteries. These materials include at least one polyphenylene sulfide (PPS) and mixtures of synthetic graphite, carbon nanotubes and conductive carbon black. Compositions according to aspects of the disclosure include high electrical conductivity, good heat and chemical resistance, and processability into thin plastic sheets using conventional polymer processing methods. In further aspects the compositions could replace metals and metalized polymeric materials in the EMI shielding of coaxial cables, cell phones, computers, laptops, monitors, and other sensitive electronic equipment requiring isolation from outside electromagnetic fields.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polyphenylene sulfide polymer" includes mixtures of two or more polyphenylene sulfide polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

### Thermoplastic Compositions

Aspects of the disclosure relate to highly-filled plastic materials that are suitable to replace titanium in electrode plates of zinc bromide flow batteries. In some aspects these materials include at least one polyphenylene sulfide (PPS) and mixtures of synthetic graphite, carbon nanotubes and conductive carbon black in different ratios. The use of carbon nanotubes in these compositions could allow for a reduction of graphite and carbon black loadings, thus producing materials of similar electrical conductivity but of improved flow compared to the compositions containing only graphite and carbon powder. Three desirable properties for such compounds include high electrical conductivity, chemical resistance, and processability into thin plastic sheets using conventional polymer processing methods. Polyphenylene sulfide (PPS) compounds suitable for use in aspects of the disclosure include, but are not limited to FORTRON^{®} 0203 and FORTRON^{®} 0205, both available from Celanese. FORTRON^{®} 0203 is a low viscosity, unfilled PPS resin that flows very easily in compounding operations. FORTRON^{®} 0205 is an unfilled, medium-range viscosity PPS resin intended for compounding with various fillers. These two grades demonstrate excellent chemical resistance and thermal stability, exhibiting a melting temperature of about 280 °C and a glass transition temperature of about 90 °C. Polyphenylene sulfide (PPS) is a high-temperature semicrystalline polymer that has a symmetrical, rigid backbone chain including recurring aromatic rings linked by sulfides. PPS provides high thermal stability, very high chemical resistance, stiffness, strength and creep resistance.

Adding glass fibers and glass fiber/mineral mixtures to standard PPS allows service temperatures up to about 240 °C, very good resistance to chemicals and solvents, inherent flame resistance, very low moisture absorption, and excellent creep resistance even at elevated temperatures. According to Celanese, the chemical structure of PPS provides excellent chemical and thermal resistance, insolubility in all known solvents below 200°C (392°F), and very good stability in both typical and alternative automotive fuels.

The carbon nanotubes suitable for use in aspects of the disclosure may be added in a form of a custom-made PPS-based masterbatch. Such masterbatches are available from NANOCYL under the PLASTICYL^{™} trade name. They include 10 wt% of NC7000^{™} multiwall carbon nanotubes produced by a Catalytic Chemical Vapor Deposition (CCVD) process. Carbon nanotubes are tube-shaped materials including carbon atoms having a nanometer size diameter. Carbon nanotubes, while appearing as a black powder, have a spaghetti like structure at the nanoscale level. Exemplary carbon nanotubes suitable for aspects of the present disclosure have an average diameter of about 10 nanometers (nm), an average length of about 1.5 micron (µm), a surface area of about 250-300 square meters per gram (m²/gr), and a volume resistivity of about 10⁻⁴ Ohm-centimeters (Ohm.cm).

Carbon nanotubes have a high aspect ratio resulting in a relatively low amount of nanotubes needed to reach a specific electrical conductivity. Further, they typically increase viscosity of compositions more than carbon black at an equal loading, but much lower quantities of nanotubes are typically required. Carbon nanotubes also offer high electrical conductivity, good processability, retention of mechanical properties, high recyclability, and thermal dissipation properties.

Specific aspects of the disclosure relate to a thermoplastic composition including: from about 40 wt% to about 75 wt% of at least one polyphenylene sulfide (PPS) polymer; and from at least 35 wt% to about 60 wt% of a combination of at least two carbon-based fillers, including a first carbon-based filler including graphite and a second carbon-based filler including carbon powder, carbon nanotubes, or a combination thereof. The composition exhibits a volume electrical resistivity of less than about 5 Ohm.centimeters (Ohm.cm) as measured by ASTM D991. The combined weight percent value of all components does not exceed 100 wt%, and all weight percent values are based on the total weight of the composition.

In some aspects the graphite filler is present in an amount from about 20 wt% to about 55 wt%.

In particular aspects the composition exhibits a volume electrical resistivity of less than 2 Ohm.cm as measured by ASTM D991.

In further aspects the composition has a Through-plane thermal conductivity of at least 0.6 watts per meter-Kelvin (W/mK) as determined in accordance with ISO 22007-2. The composition may in certain aspects have an In-plane thermal conductivity of at least 5.4 W/mK as determined in accordance with ISO 22007-2. The composition may have a bulk thermal conductivity of at least 1.8 W/mK.

In specific aspects the composition has a far field electromagnetic wave shielding effectiveness (SE) of at least 80 decibels (dB) at a frequency of from 3 GHz to 6 GHz as tested in accordance with ASTM D4935.

In some aspects the composition includes at least one additional additive. The at least one additional additive may include, but is not limited to, an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.

In other aspects the composition includes graphite, carbon powder and carbon nanotubes.

### Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

In specific aspects a method for forming a composition including from about 40 wt% to about 75 wt% of at least one polyphenylene sulfide (PPS) polymer and from at least 35 wt% to about 60 wt% of a combination of at least two carbon-based fillers includes: combining the at least one PPS polymer and the at least two carbon-based fillers to form a mixture; and extruding the mixture to form the composition. The at least two carbon-based fillers include a first carbon-based filler including graphite and a second carbon-based filler including carbon powder, carbon nanotubes, or a combination thereof. The composition exhibits a volume electrical resistivity of less than about 5 Ohm.cm as measured by ASTM D991. The combined weight percent value of all components does not exceed 100 wt%, and all weight percent values are based on the total weight of the composition.

In certain aspects one or more of the carbon-based fillers is provided in a form of a PPS-based masterbatch composition.

Thermoplastic compositions formed according to these methods may include the components and amounts described herein, and may have one or more of the properties described herein.

### Articles of Manufacture

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded.

In particular aspects the article is an electrically conductive electrode plate of a flow battery, a thermally conductive plate of a heat exchanger used to transfer heat between two fluids, or an enclosure or package to protect electronic devices used in medical, military, and aerospace electronics from the damaging effect of electromagnetic radiation.

In some aspects the thermoplastic compositions may be extruded into a sheet. In further aspects the thermoplastic compositions may be extruded, injection molded, compression molded, injection-compression molded, or some combination of these processes. Sheets of varying thickness may be formed. In some aspects the compositions may be formed into sheets having a thickness of up to 3 mm or greater. In further aspects thin sheets of from 0.020 inches to 0.060 inches may be formed. In specific aspects thin sheets have a thickness of no more than 0.125 inches. As discussed herein extrusion forming may be a desirable process for making these thin sheets. Thin sheets having a thickness of no more than 0.125 inches may in some aspects be suitable for use in flow batteries (e.g., bipolar electrode plates in such batteries). In other applications - for example heat exchanger plates and enclosures for automotive radar sensors - thicker sheets may be desirable.

Various combinations of elements of this disclosure are encompassed by this disclosure, e.g., combinations of elements from dependent claims that depend upon the same independent claim.

### Aspects of the Disclosure

In various aspects, the present disclosure pertains to and includes at least the following aspects.

Aspect 1. A thermoplastic composition comprising:
from about 40 wt% to about 75 wt% of at least one polyphenylene sulfide (PPS) polymer; and
from at least 35 wt% to about 60 wt% of a combination of at least two carbon-based fillers, comprising a first carbon-based filler comprising graphite and a second carbon-based filler comprising carbon powder, carbon nanotubes, or a combination thereof,
wherein the composition exhibits a volume electrical resistivity of less than about 5 Ohm.cm as measured by ASTM D991, and
wherein the combined weight percent value of all components does not exceed 100 wt%, and all weight percent values are based on the total weight of the composition.

Aspect 2. The thermoplastic composition according to Aspect 1, wherein the graphite filler is present in an amount from about 20 wt% to about 55 wt%.

Aspect 3. The thermoplastic composition according to Aspect 1 or 2, wherein the composition exhibits a volume electrical resistivity of less than 2 Ohm.cm as measured by ASTM D991.

Aspect 4. The thermoplastic composition according to any of Aspects 1 to 3, wherein the composition has a Through-plane thermal conductivity of at least 0.6 W/mK as determined in accordance with ISO 22007-2.

Aspect 5. The thermoplastic composition according to any of Aspects 1 to 4, wherein the composition has an In-plane thermal conductivity of at least 5.4 W/mK as determined in accordance with ISO 22007-2.

Aspect 6. The thermoplastic composition according to any of Aspects 1 to 5, wherein the composition has a bulk thermal conductivity of at least 1.8 W/mK.

Aspect 7. The thermoplastic composition according to any of Aspects 1 to 6, wherein the composition has a far field electromagnetic wave shielding effectiveness (SE) of at least 80 decibels (dB) at a frequency of from 3 GHz to 6 GHz as tested in accordance with ASTM D4935.

Aspect 8. The thermoplastic composition according to any of Aspects 1 to 7, wherein the composition comprises at least one additional additive.

Aspect 9. The thermoplastic composition according to Aspect 8, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.

Aspect 10. The thermoplastic composition according to any of Aspects 1 to 9, wherein the composition comprises graphite, carbon powder and carbon nanotubes.

Aspect 11. An extruded sheet comprising the composition according to any of Aspects 1 to 10.

Aspect 12. The extruded sheet according to Aspect 11, wherein the sheet has a thickness of no more than 0.125 inches (in).

Aspect 13. A method for forming a composition comprising from about 40 wt% to about 75 wt% of at least one polyphenylene sulfide (PPS) polymer and from at least 35 wt% to about 60 wt% of a combination of at least two carbon-based fillers, the method comprising:
combining the at least one PPS polymer and the at least two carbon-based fillers to form a mixture; and
extruding the mixture to form the composition,
wherein the at least two carbon-based fillers comprise a first carbon-based filler comprising graphite and a second carbon-based filler comprising carbon powder, carbon nanotubes, or a combination thereof,
wherein the composition exhibits a volume electrical resistivity of less than about 5 Ohm.cm as measured by ASTM D991, and
wherein the combined weight percent value of all components does not exceed 100 wt%, and all weight percent values are based on the total weight of the composition.

Aspect 14. The method according to Aspect 13, wherein one or more of the carbon-based fillers is provided in a form of a PPS-based masterbatch composition.

Aspect 15. An article comprising the thermoplastic composition according to any of Aspects 1 to 10, wherein the article comprises: an electrically conductive electrode plate of a flow battery; a thermally conductive plate of a heat exchanger used to transfer heat between two fluids; or an enclosure or package to protect electronic devices used in medical, military, or aerospace electronics from electromagnetic radiation.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

The PPS-based masterbatch used in the aspects of the disclosure was diluted with fresh, unfilled polyphenylene sulfide resin (e.g., FORTRON^{®} 0203B6). FORTRON^{®} 0203B6 is a low viscosity, unfilled grade that flows very easily in compounding operations. Compositions according to aspects of the disclosure included from about 45 wt% to about 65 wt% of the masterbatch; the amount of fresh PPS resin was kept at 15 wt% for most of the conditions investigated. These polymer/masterbatch ratios produced materials including from about 4.5 weight % to about 6.5 weight % of carbon nanotubes in the final formulation. The degree of crystallinity of both PPS resins was investigated by DSC, and it was found to be 63.8% for FORTRON^{®} 0203B6 and 56.6% for FORTRON^{®} 0205B4. These values were calculated using the heat of melting, which was equal to 48.83 Joules per gram (J/g) for FORTRON^{®} 0203B6 and 43.30 J/g for FORTRON^{®} 0205B4, and the theoretical melting enthalpy obtained from literature, which is equal to 76.5 J/g for a PPS having 100% crystallinity.

Some of PPS-based compositions described herein were injection molded into 150 millimeter (mm) x 108 mm plaques having a thickness of 2.50 mm and 2.00 mm; the plaques were tested for physical and electrical conductivity properties. The graphite used in the compositions was a highly crystalline material of high purity, which is produced at ultrahigh temperatures that vaporize impurities such as metal oxides, sulfur, iron, aluminum and many others to render 99%+ pure carbon synthetic graphite in particle sizes from less than 1 micron to several hundreds of microns. The carbon black powder used in the compositions has a primary/basic particle size of some 10-50 nanometers (nm), with aggregates of several hundred nanometers in size, and agglomerates as large as 100-200 microns.

### Example 1

Compositions were formed, injection molded and extruded into plaques and certain properties were tested according to Table 1.

**Table 1 - Comparative and Example Compositions**

| **Components** | **C1.1** | **Ex1.2** | **Ex1.3** | **Ex1.4** | **Ex1.5** | **Ex1.6** | **C1.7** |
|---|---|---|---|---|---|---|---|
| PPS (Fortron^{®} 0205B4) | 67 | 57 | 47 | 64 | 54 | 44 | 34 |
| Graphite (Asbury 1125) | 30 | 40 | 50 | 30 | 40 | 50 | 60 |
| Carbon Black (CB) (Ketjen EC-300J) | 3 | 3 | 3 | 6 | 6 | 6 | 6 |
| Total Carbon Filler | 33 | 43 | 53 | 36 | 46 | 56 | 66 |
| Component Total (wt%) | 100 | 100 | 100 | 100 | 100 | 100 | 100 |
| | | | | | | | |

| **Properties** | | | | | | | |
|---|---|---|---|---|---|---|---|
| Volume Electrical Resistivity (Ohm.cm) (ASTM D991) | 5.208 | 1.894 | 0.485 | 0.664 | 0.306 | 0.106 | - |
| Density (gr/cm³) (ASTM D792) | 1.546 | 1.625 | 1.707 | 1.563 | 1.638 | 1.734 | - |
| Through-plane Thermal Conductivity (W/mK) (ISO 22007-2) | 0.523 | 0.733 | 1.047 | 0.625 | 0.841 | 1.055 | - |
| In-plane Thermal Conductivity (W/mK) (ISO 22007-2) | 5.246 | 8.720 | 12.16 5 | 5.423 | 8.556 | 14.70 5 | - |
| Bulk Thermal Conductivity (W/mK) (ISO 22007-2) | 1.657 | 2.528 | 3.569 | 1.841 | 2.682 | 3.938 | - |
| Surface Electrical Resistivity (Ohm/sq) (ASTM D257) | - | - | 3 | 3.3 | - | 0.7 | - |
| Shielding Effectiveness (dB) at 28.5 MHz (modified ASTM D4935) | - | - | 36 | 35.2 | - | 48.7 | - |

All of the compositions were injection moldable under conventional molding conditions. All of the compositions except comparative composition C1.7 were extrudable at conventional extrusion temperatures (< 350 degrees Celsius (°C)) and pressures (<200 pounds per square inch (PSI)) for Ex1.6 and < 35 psi for Ex1.2-Ex1.5). Composition C1.7 was difficult to extrude and required an extrusion melt temperature of about 367 °C and a die melt pressure of about 600 psi. In view of these required extrusion conditions composition C1.7 containing an amount of total carbon filler in excess of 60wt% is not practical for injection molded articles.

From the results in Table 1 it was observed that comparative composition C1.1 having less than 35 wt% carbon-based filler including 30 wt% graphite had high volume electrical resistivity of greater than 5 Ohm.centimeters (Ohm.cm) as determined in accordance with ASTM D991. The composition also had low thermal conductivity properties - less than 0.6 watts per meter Kelvin (W/mK) in the Through-plane direction, less than 5.4 W/mK in the In-plane direction, and a bulk thermal conductivity of less than 1.8 W/mK. Bulk thermal conductivity is calculated as the square root of the product of Through-plane thermal conductivity and In-plane thermal conductivity. In contrast the example compositions Ex1.2 through Ex1.6 having at least 35 wt% carbon-based filler including at least 30 wt% graphite had relatively low volume resistivity (less than 5 Ohm.com), high Through-plane thermal conductivity (above 0.6 W/mK), high In-plane thermal conductivity (above 5.4 W/mK) and high bulk conductivity (above 1.8 W/mK). The thermal conductivity of these materials was measured according to ISO 22007-2 for Through and In-plane conductivities (measured on 60 mm x 60 mm x 3 mm plaques). The bulk thermal conductivity was calculated from the values of the Through-plane Thermal Conductivity and the In-plane Thermal Conductivity.

Some of the example compositions exhibited a surface electrical resistivity of less than 4 Ohm/sq as determined in accordance with ASTM D257, and a Total Shielding Effectiveness of at least 35 dB as determined in accordance with SABIC's modified ASTM D4935 test method which is based on the so-called Faradex^{™} meter. The modified ASTM D4935 method uses a pulsed magnetic field through a conductive material to measure the electrical conductivity of the material. This conductivity measuring system reports both square resistivity and far field shielding. The electromagnetic shielding of the far field, in dB, is calculated from the square resistance measured in Ohm. The test requires the evaluation of at least 5 plaques of 3 in x 5 in dimensions. It has been observed that for carbon-based materials the Faradex^{™} meter is less reliable than the standard method because the modified method for calculating SE only takes the reflection (and not the absorption) portion of the radiation into account.

### Example 2

Compositions were formed, injection molded and extruded into plaques and certain properties were tested according to Table 2.

**Table 2 - Comparative and Example Compositions**

| **Component** | **Ex2.1** | **Ex2.2** | **Ex2.3** | **Ex2.4** | **C2.5** |
|---|---|---|---|---|---|
| PPS (Fortron^{®} 0205B4) | 44 | | | | |
| PPS (Fortron^{®} 0203B6) | | 44 | 44 | 58 | 49 |
| Graphite (Asbury 1125) | 50 | 50 | | | |
| Graphite (Timrex^{®} KS-44) | | | 50 | 29 | 38 |
| Carbon Black (CB) (Ketjen EC-300J) | 6 | 6 | 6 | 13 | 13 |
| Total Carbon Filler | 56 | 56 | 56 | 42 | 51 |
| Component Total (wt%) | 100 | 100 | 100 | 100 | 100 |
| | | | | | |

| **Properties** | | | | | |
|---|---|---|---|---|---|
| Volume Electrical Resistivity (Ohm.cm) (ASTM D991) | 0.86 | 0.804 | 0.767 | 0.86 | - |
| Modulus of Elasticity (MPa) (ASTM D638) | 18140 | 18980 | 14680 | 13380 | - |
| Flexural Modulus (MPa) (ASTM D790) | 19600 | 19400 | 17900 | 12100 | - |
| IZOD Impact Strength, notched RT (J/m) (ASTM D256) | 16.6 | 16.6 | 16.3 | 16 | - |
| IZOD Impact Strength, un-notched RT (J/m) (ASTM D256) | 59.4 | 52.7 | 46.4 | 59.1 | - |
| Heat Deflection Temperature, 1.82 MPa, 3.2mm (°C) (ASTM D648) | 251 | 252 | 252 | 229 | - |
| MFR, 330°C, 21.6Kg (gr/10min) (ASTM D1238) | 88.1 | 84.2 | 8.6 | 13.9 | - |
| Density (gr/cm³) (ASTM D792) | 1.728 | 1.728 | 1.724 | 1.585 | - |
| Through-plane Thermal Conductivity (W/mK) (ISO 22007-2) | 1.087 | 1.322 | 1.420 | 0.850 | - |
| In-plane Thermal Conductivity (W/mK) (ISO 22007-2) | 16.901 | 15.556 | 11.118 | 4.328 | - |
| Bulk Thermal Conductivity (W/mK) (ISO 22007-2) | 4.286 | 4.536 | 3.973 | 1.918 | - |

All of the compositions were injection moldable using conventional molding conditions. All compositions except C2.5 were extrudable under conventional extrusion conditions; it is believed that the high carbon black (CB) content (13 wt%) in combination with a high graphite content (38 wt%) prevented extrusion. Composition Ex2.4 also had a 13 wt% CB content but a lower graphite content and was extrudable.

From the results in Table 2 it was observed that example compositions Ex2.1 to Ex2.4 had a volume electrical resistivity of less than 0.9 Ohm.cm as determined in accordance with ASTM D991. Also, the Through-plane Thermal Conductivity (W/mK) varied between 0.85 and 1.42, the In-plane Thermal Conductivity (W/mK) between 4.3 and 16.9, and the Bulk Thermal Conductivity (W/mK) between 1.9 and 4.5.

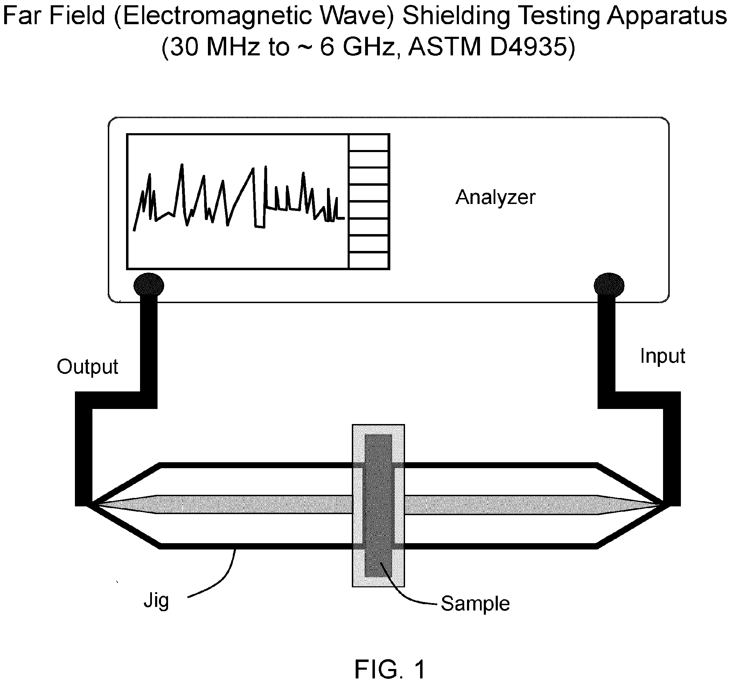

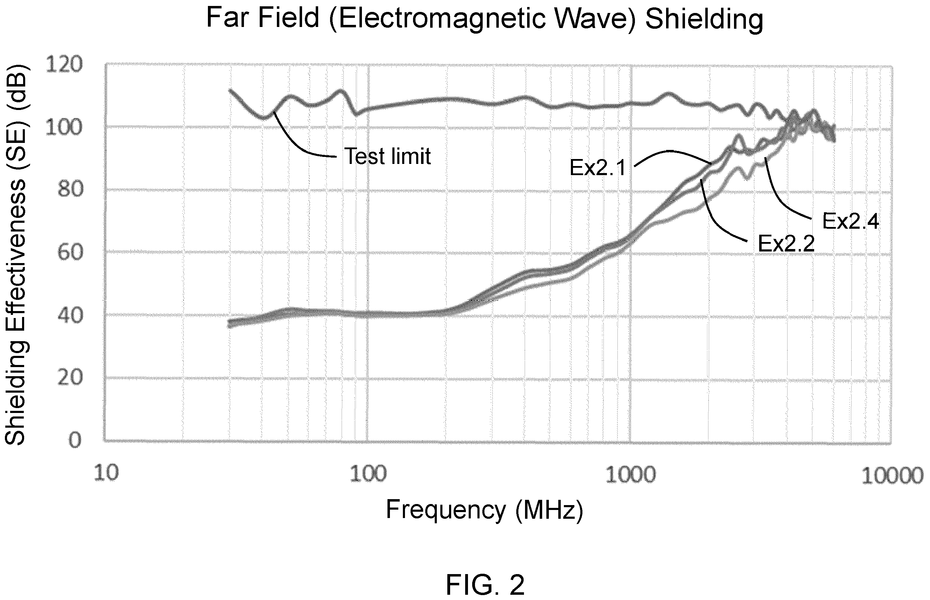

Shielding Effectiveness properties were also determined for compositions Ex2.1, Ex2.2 and Ex2.4 in accordance with ASTM D4935 using the testing apparatus of FIG. 1. Specifically, the far field electromagnetic wave shielding effectiveness (SE) was evaluated for a frequency range of from about 30 megahertz (MHz) to about 6 gigahertz (GHz). The SE results are shown in FIG. 2. The results show that all samples have similar shielding effectiveness. In particular it was observed that all samples had a SE of at least 80 dB at a frequency of 3 GHz and above.

### Example 3

Compositions were formed, injection molded and extruded into plaques and certain properties were tested according to Table 3:

**Table 3 - Comparative and Example Compositions**

| Component | C3.1 | Ex3.2 | Ex3.3 | C3.4 |
|---|---|---|---|---|
| PPS/CNTs (Plasticyl masterbatch PPS and 10 wt% NC7000 CNTs) | 65 | 45 | 45 | 45 |
| PPS (Fortron^{®} 0203 B6) | | 15 | 15 | 15 |
| Graphite (Timrex^{®} KS-44) | 25 | 35 | 33 | 31 |
| Carbon Black (CB) (Ketjen EC-300J) | 10 | 5 | 7 | 9 |
| Total Carbon Filler | 41.5 | 44.5 | 44.5 | 44.5 |
| Total Polymer | 58.5 | 55.5 | 55.5 | 55.5 |
| Total (wt%) | 100 | 100 | 100 | 100 |
| | | | | |

| Properties | | | | |
|---|---|---|---|---|
| Modulus of Elasticity (MPa) (ASTM D638) | - | 15380 | 15240 | - |
| Flexural Modulus (MPa) (ASTM D790) | - | 12900 | 12900 | - |
| IZOD Impact Strength, notched RT (J/m) (ASTM D256) | - | 19.2 | 20.3 | - |
| IZOD Impact Strength, un-notched RT (J/m) (ASTM D256) | - | 134 | 109 | - |
| Heat Deflection Temperature, 1.82 MPa, 3.2mm (°C) (ASTM D648) | - | 171 | 167 | - |
| Specific Gravity (ASTM D792) | - | 1.618 | 1.612 | - |
| Volume Electrical Resistivity (Ohm.cm) (ASTM D257) | - | 27.1 | 20 | - |

Comparative compositions C3.1 and C3.4 were not extrudable. Composition C3.1 was too viscous and plugged the die head of the extruder in a short amount of time. Composition C3.4 was not extrudable at conventional extrusion temperatures and pressures. Example compositions Ex3.2 and Ex3.3 were extrudable at conventional extrusion temperatures and pressures.

Several attempts were made to measure the volume electrical resistivity by ASTM D991 of plaques molded from Ex3.2 and Ex3.3 with no success. It is believed that this was because the samples may have been too electrically conductive and therefore outside the range of validity of the instrument. The volume electrical resistivities of these two samples were measured using ASTM D257, with the results shown in Table 3. Since ASTM D257 was originally designed to measure the electrical resistivity of slightly conductive materials, unlike the materials described in the present disclosure, it is common for ASTM D257 to overestimate the volume electrical resistivity of a material when compared with values obtained by ASTM D991.

The melt flow rate (MFR) of Ex3.2 and Ex3.3 could not be measured due to the die of the testing machine getting completely plugged when trying to flow the melt out of the tester. It is speculated that since the polymer crystallizes rapidly above the Tg, it solidifies before it can exit out of the die thus plugging the orifice of the MFR tester. This situation may be aggravated by the fact that the high loadings of carbon filler present in these materials may lead to even higher crystallization speeds thus helping the polymer to solidify faster when cooling.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. §1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:
from about 40 wt% to about 75 wt% of at least one polyphenylene sulfide (PPS) polymer; and
from at least 35 wt% to about 60 wt% of a combination of at least two carbon-based fillers, comprising a first carbon-based filler comprising graphite and a second carbon-based filler comprising carbon powder, carbon nanotubes, or a combination thereof,
wherein the composition exhibits a volume electrical resistivity of less than about 5 Ohm.cm as measured by ASTM D991, and
wherein the combined weight percent value of all components does not exceed 100 wt%, and all weight percent values are based on the total weight of the composition.

2. The thermoplastic composition according to claim 1, wherein the graphite filler is present in an amount from about 20 wt% to about 55 wt%.

3. The thermoplastic composition according to claim 1 or 2, wherein the composition exhibits a volume electrical resistivity of less than 2 Ohm.cm as measured by ASTM D991.

4. The thermoplastic composition according to any of claims 1 to 3, wherein the composition has a Through-plane thermal conductivity of at least 0.6 W/mK as determined in accordance with ISO 22007-2.

5. The thermoplastic composition according to any of claims 1 to 4, wherein the composition has an In-plane thermal conductivity of at least 5.4 W/mK as determined in accordance with ISO 22007-2.

6. The thermoplastic composition according to any of claims 1 to 5, wherein the composition has a bulk thermal conductivity of at least 1.8 W/mK.

7. The thermoplastic composition according to any of claims 1 to 6, wherein the composition has a far field electromagnetic wave shielding effectiveness (SE) of at least 80 decibels (dB) at a frequency of from 3 GHz to 6 GHz as tested in accordance with ASTM D4935.

8. The thermoplastic composition according to any of claims 1 to 7, wherein the composition comprises at least one additional additive.

9. The thermoplastic composition according to claim 8, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.

10. The thermoplastic composition according to any of claims 1 to 9, wherein the composition comprises graphite, carbon powder and carbon nanotubes.

11. An extruded sheet comprising the composition according to any of claims 1 to 10.

12. The extruded sheet according to claim 11, wherein the sheet has a thickness of no more than 0.125 inches (in).

13. A method for forming a composition comprising from about 40 wt% to about 75 wt% of at least one polyphenylene sulfide (PPS) polymer and from at least 35 wt% to about 60 wt% of a combination of at least two carbon-based fillers, the method comprising:
combining the at least one PPS polymer and the at least two carbon-based fillers to form a mixture; and
extruding the mixture to form the composition,
wherein the at least two carbon-based fillers comprise a first carbon-based filler comprising graphite and a second carbon-based filler comprising carbon powder, carbon nanotubes, or a combination thereof,
wherein the composition exhibits a volume electrical resistivity of less than about 5 Ohm.cm as measured by ASTM D991, and
wherein the combined weight percent value of all components does not exceed 100 wt%, and all weight percent values are based on the total weight of the composition.

14. The method according to claim 13, wherein one or more of the carbon-based fillers is provided in a form of a PPS-based masterbatch composition.

15. An article comprising the thermoplastic composition according to any of claims 1 to 10, wherein the article comprises: an electrically conductive electrode plate of a flow battery; a thermally conductive plate of a heat exchanger used to transfer heat between two fluids; or an enclosure or package to protect electronic devices used in medical, military, or aerospace electronics from electromagnetic radiation.
